# EUROPEAN PATENT APPLICATION

(11) **EP 1 429 063 A1**
(43) Date of publication of application: **16.06.2004**
(21) Application number: 02380252.3
(22) Date of filing: 09.12.2002
(51) Int. Cl.: F16K 27/06

(54) **System for retaining internal components in valves**

(71) Applicant: Valvulas Arco, S.L., 46134 Foyos (Valencia) (ES)
(72) Inventor: Ferrer Beltran, José Ma, 46134 Foyos ( Valencia) Spain (ES)
(74) Representative: Isern-Cuyas, Maria Luisa

(57) **Abstract**

The object of this Patent is a "System for retaining internal components in valves for gaseous fluids", the use of which is made explicit in the description of the invention itself.

The system is applicable to any kind of valve for gaseous fluids and is characterised in that the upper part of the neck (5) of the valve box presents a slight optional thinning of its walls in order to facilitate its being folded towards the centre and simultaneously rivetted onto a higher step (6) of the intermediate bush (7), while the edge (8) of the neck is bevelled towards the interior of the box.

## Description

### OBJECT OF THE INVENTION

The object to which the invention protected in this Patent refers consists of a "System for retaining internal components in valves for gaseous fluids".

Even though the system claimed is applicable to any kind of valve whatsoever designed for gaseous fluids, both in the description as well as in the drawing, reference is made, as an example, to a valve of the type that operates at a one-quarter turn between the completely open and the closed positions and has a projection on the drive shaft that locks its movement into the closed position, by means of the automatic lodging of the said projection into an opening of the same size existing in the intermediate bush, it being necessary in order to release the projection and to activate the control in the open direction, to exert pressure on it, overcoming the opposition of an antagonistic axial spring contained inside the shaft.

In any case, it must be understood that the application of the system to valves for gaseous fluids of the kinds described does not constitute a compulsory requirement but is rather a non-restrictive example and a simplifying and optional choice.

### BACKGROUND

The valves for gaseous fluids, with a straight or angular pitch and with the technical, structural and functional characteristics described above, are known.

Such valves must specifically fulfil the function for which they are designed, that is, the regulation of the safe flow of fluids, as they are used preferably in installations for the distribution of inflammable gases (town gas, natural gas, butane). As a result, they must be capable of withstanding relatively significant increases in the internal pressure without rupture or decomposition.

In order to successfully comply with this technical conditioning factor, a number of solutions are known and have been used, all of which are geared towards ensuring the retention of the intermediate bush between the drive shaft and the neck of the valve box, in its locked position, including any internal excess pressures as may eventually occur.

One of the known solutions consists of the introduction of an open steel coil in a peripheral groove made in the internal surface of the neck of the valve box, such coil bringing about a reduction in the straight section of the said neck, preventing the bush from passing through to the outside. This solution involves a drawback, which consists of the difficulty in order to insert the coil in the groove where it is to be lodged, as it must be deformed, reducing its diameter, in order for it to accommodate itself into its final position on recovering its elasticity.

According to another known solution, the upper area of the neck of the box is threaded externally in order to receive the body for retaining the intermediate bush, comprised by a cap or screw stopper, with a central hole for passage of the drive shaft of the valve. This solution involves a drawback, which consists of the circumstance that the threaded union between the neck of the box and the cap or stopper could deteriorate or be manipulated.

### DESCRIPTION OF THE INVENTION

The purpose of the invention constituting the object of this Patent consists of the overcoming of the technical drawbacks described above, which are found in the known methods for retaining the internal components in safety valves for gaseous fluids, having been expressly conceived and designed in pursuit of this priority objective.

According to the invention claimed, the upper part of the neck of the valve box advantageously presents an optional thinning of the thickness of its walls in order to facilitate its being folded towards the centre and simultaneously riveted onto a higher step of the intermediate bush which it retains, thus contributing to keeping it immobile, while the edge of the neck is bevelled towards the inside of the box in order to improve its adaptation to the step of the bush on which it is riveted.

The system for retaining the internal components in valves for gaseous fluids, which is protected in this Patent, provides many advantages with respect to the known systems performing the same function, which have been described as precedents. In effect:
a) ― It does not require the addition of independent parts (steel coil, threaded bush), dedicated exclusively to the function of retaining the internal components.
b) ― It simplifies the process of assembling the valve and shortens the time required, by eliminating the operations corresponding to the placement of the unnecessary parts.
c) ― The actual implementation of the system claimed is characterised by great mechanical simplicity and considerable speed of execution, as the two operations comprising it (folding and riveting of the upper edge of the neck of the box) can be performed simultaneously and mechanically (for example, by means of a press).
d) ― As a result of the advantages set out above, the retaining system claimed provides a significant reduction in manufacturing costs, particularly in the production of large series of valves.
e) ― In addition, the retaining by riveting claimed is irreversible and cannot be broken apart, whereby not only the tightness of the valve is guaranteed but also the inviolability of the device overall in the face of improper or ill-intentioned handling; and for all of these reasons, it enhances the safety of the valve against risks of deflagration or explosion.

### BRIEF DESCRIPTION OF THE DRAWINGS

In order to complement the description of the invention and facilitate the interpretation of the formal, structural and functional characteristics of its object, drawings are attached which show in diagram form different aspects of a preferred implementation of the "System for retaining internal components in valves for gaseous fluids", constituting the object of this Patent. In the said drawings, which represent a straight-run valve as an example:

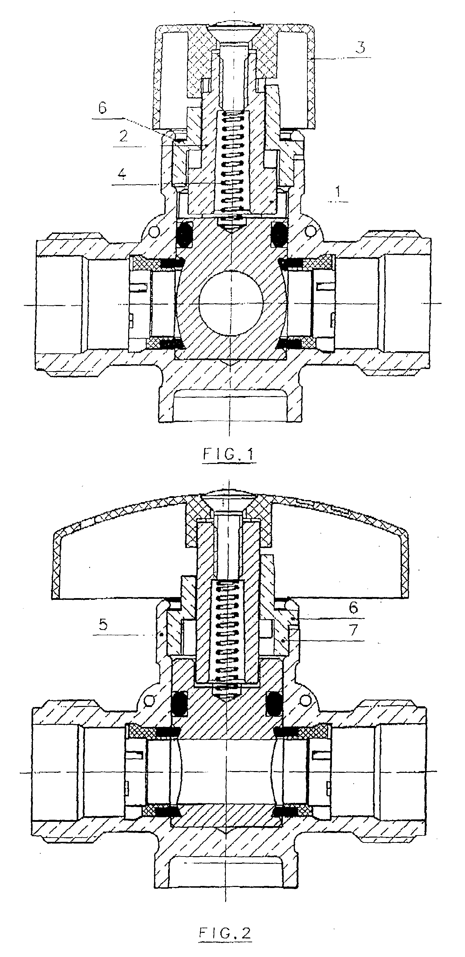

- Figure 1 is a lengthwise cross-section of a straight-run valve, with the technical characteristics claimed, represented with the seal in the closed position (no flow) and locked into this position; while Figure 2 shows the same section but with the seal in the open position (maximum flow).

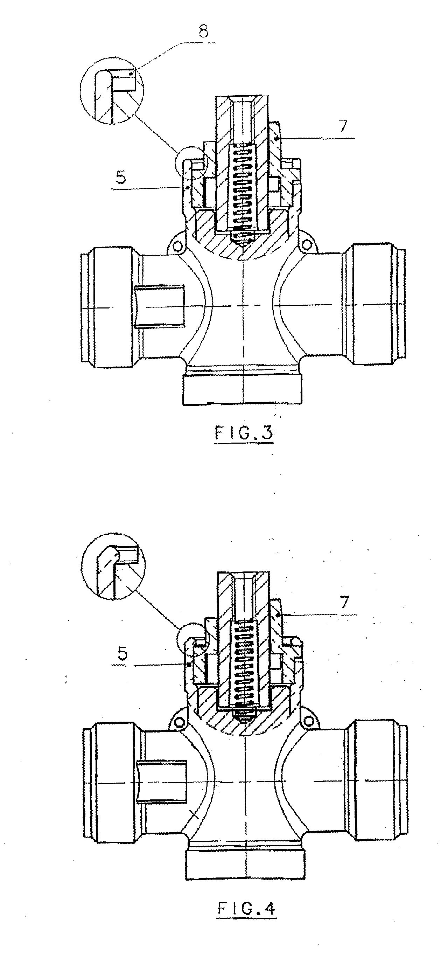

- Figure 3 is a lateral projection drawing of the valve box, showing, by means of an axial cut of the neck, the arrangement of its structural elements prior to the folding and riveting of the edge of the neck on the higher step of the intermediate bush; while Figure 4 corresponds to that same view and section, after simultaneously performing the aforesaid operations.

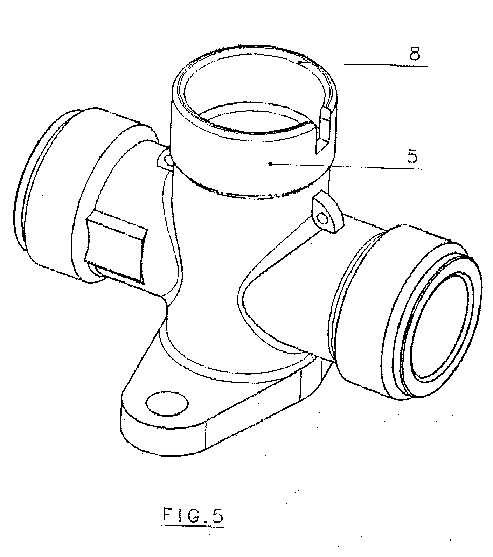

- Figure 5 is a perspective of the valve box, showing the peculiar bevelled shape of the edge of the neck of the valve.

### DESCRIPTION OF A PREFERRED IMPLEMENTATION

In order to clearly show the nature and the scope of the advantageous application of the "System for retaining internal components in valves for gaseous fluids", which constitutes the object of the invention claimed, its structure and implementation are described below by referring to the drawings which, on representing a preferred implementation of the said object, for illustrative purposes only, must be understood in their broadest sense and not as restrictive of the application and the content of the invention claimed.

The system claimed is applicable to any kind of valve for gaseous fluids whatsoever, and an example of its implementation is given with respect to a valve of the kind that operates at one-quarter of a turn, with a projection (1) on the shaft (2) that locks its turning motion into the closed position, it being necessary in order to open it, for allowing the passage of fluid, to press the control (3), overcoming the opposition of an axial spring (4).

The upper part of the neck (5) of the valve box presents a slight optional thinning of its walls in order to facilitate its being folded towards the centre and simultaneously riveted onto a higher step (6) of the intermediate bush (7), while the edge (8) of the neck is bevelled towards the interior of the box.

## Claims

1. System for retaining internal components in valves for gaseous fluids, applicable to any kind of the foregoing valves whatsoever, **characterised because** the upper part of the neck (5) of the valve box presents a slight optional thinning of its walls in order to facilitate its being folded towards the centre and simultaneously riveted onto a higher step (6) of the intermediate bush (7), while the edge (8) of the neck is bevelled towards the interior of the box.
